# EUROPÄISCHE PATENTSCHRIFT

(11) **EP 3 796 304 B1**
(45) Veröffentlichungstag und Bekanntmachung des Hinweises auf die Patenterteilung: **31.08.2022**
(21) Anmeldenummer: 20177390.0
(22) Anmeldetag: 29.05.2020
(51) Int. Cl.: G10C 1/04, G10C 3/06

(54) **AKUSTISCHER RESONANZÜBERTRAGER, KLAVIER UND FLÜGEL MIT DEMSELBEN UND VERFAHREN ZUR KLANGOPTIMIERUNG VON KLAVIEREN UND FLÜGELN**
ACOUSTIC RESONANCE TRANSFORMER, PIANO AND GRAND PIANO USING THE SAME AND METHOD OF OPTIMISING SOUND OF PIANOS AND GRAND PIANOS
TRANSFORMATEUR À RÉSONANCE ACOUSTIQUE, PIANO ET PIANO À QUEUE EN ÉTANT POURVU ET PROCÉDÉ D'OPTIMISATION DE LA TONALITÉ DES PIANOS ET DES PIANOS À QUEUE

(30) Priorität: 04.06.2019 DE 102019003861
(43) Veröffentlichungstag der Anmeldung: 24.03.2021
(60) Teilanmeldung: 21158094.9
(73) Patentinhaber: Senftleben, Knut, 21781 Cadenberge (DE)
(72) Erfinder: Senftleben, Knut, 21781 Cadenberge (DE)
(74) Vertreter: Manasse, Uwe

(56) Entgegenhaltungen:
- DE-C- 33 779
- US-A- 1 664 553
- US-A1- 2007 048 708

## Beschreibung

Die vorliegende Erfindung betrifft einen akustischen Resonanzübertrager, ein Klavier mit einem akustischen Resonanzübertrager, ein Flügel mit einem akustischen Resonanzübertrager und Verfahren zur Klangoptimierung von Klavieren und Flügeln.

In Klavieren und Flügeln wird der Klang durch die Schwingung einzelner Saiten erzeugt. Diese Saiten werden über Hammer angeschlagen, die wiederum durch Betätigung von einzelnen Tasten bewegt werden. Bei einem Klavier stehen die Saiten aufrecht im Korpus des Klaviers und werden von vorne angeschlagen, beim Flügel liegen die Saiten horizontal im Klangkörper (Korpus) und werden von unten angeschlagen. Der Begriff "Klavier" wird in der Vorliegenden Anmeldung in seiner allgemeinen Bedeutung, als "besaitetes Tasteninstrument" verwendet. Ein Flügel bezeichnet eine besondere Form des Klaviers.

In Flügeln und Klavieren liegen die Saiten an einem Ende auf einem Steg auf, der am Resonanzboden des Korpus befestigt ist. Über den Steg werden die Vibrationen der Saiten auf den Resonanzboden übertragen. Der Resonanzboden versetzt die umgebende Luft in Schwingung, wodurch der Klang entsteht. So erzeugt der ganze Flügel, bzw. das ganze Klavier, mit dem Resonanzboden den Klang.

Während die Saiten in Abhängigkeit ihrer Länge und anliegenden Spannung jeweils einen Grundton, also eine Sinusschwingung, erzeugen, werden daneben auch Obertöne erzeugt. Obertöne werden durch mitschwingende Bauteile des Instruments erzeugt und entsprechen, im Unterschied zu einem Grundton, einer Überlagerung von mehreren Sinusschwingungen, also einem Tongemisch. Jedes der mitschwingenden Bauteile des Instruments hat Eigenfrequenzen, die von der Größe und dem Material des Bauteils sowie Verbindungspunkten zu anderen Bauteilen des Instruments abhängig sind und Obertöne erzeugen können. Werden Obertöne mit einer anderen Frequenz als der Eigenfrequenz der angeschlagenen Saite erzeugt, bedeutet dies auch eine Übertragung von Schwingungsenergie der gewünschten Frequenz des Grundtons auf andere Frequenzen der Obertöne. Die gewünschte Frequenz des Grundtons wird dadurch leiser. Die Kombination aus Grundton und Obertönen kann als störend empfunden werden.

US1664553A schlägt ein System vor, welches es erlaubt den Klang eines Flügels mit Hilfe verschiebbarer Reflektoren, welche am Hauptdeckel bzw. am Korpus angebracht sind, zu beeinflussen.

Der vorliegenden Erfindung liegt somit die Aufgabe zugrunde, Grundton-Schwingungsanteile in Klavieren und Flügeln zu erhöhen und Oberton-Resonanzen zu reduzieren.

Erfindungsgemäß wird diese Aufgabe gemäß einem ersten Aspekt durch einen akustischen Resonanzübertrager gemäß Anspruch 1 gelöst.

Weiterhin wird die Aufgabe gelöst durch ein Verfahren zur Klangoptimierung eines Klaviers gemäß Anspruch 12 und durch ein Verfahren zur Klangoptimierung eines Flügels gemäß Anspruch 13.

Außerdem wird die Aufgabe gemäß einem zweiten Aspekt gelöst durch ein Klavier gemäß Anspruch 10.

Ferner wird die Aufgabe gemäß einem dritten Aspekt gelöst, durch einen Flügel gemäß Anspruch 11.

Bei dem akustischen Resonanzübertrager gemäß dem ersten Aspekt kann vorgesehen sein, dass mindestens eines der akustischen Resonanzübertragungselemente kugelförmig ist und einen Kugeldurchmesser d1 aufweist sowie so an der flexiblen Aufhängung angeordnet ist, dass der Kugeldurchmesser d1 mit einer Längsachse der flexiblen Aufhängung zusammenfällt.

Alternativ kann bei dem akustischen Resonanzübertrager vorgesehen sein, dass mindestens eines der akustischen Resonanzübertragungselemente zylinderförmig ist und eine Zylinderachse aufweist sowie so an der flexiblen Aufhängung angeordnet ist, dass die Zylinderachse des akustischen Resonanzübertragungselements mit einer Längsachse der flexiblen Aufhängung zusammenfällt.

In einer weiteren alternativen Ausführungsform des akustischen Resonanzübertragers ist mindestens eines der akustischen Resonanzübertragungselemente zylinderförmig, weist eine

Zylinderachse auf und ist so an der flexiblen Aufhängung angeordnet, dass die Zylinderachse des akustischen Resonanzübertragungselements senkrecht zu einer Längsachse der flexiblen Aufhängung ausgerichtet ist.

Gemäß diesen beiden zuletzt genannten Ausführungsformen kann mindestens eines der akustischen Resonanzübertragungselemente eine Zylinderachsenlänge 12 im Bereich von 3 cm und 15 cm aufweisen.

Optional weist der akustische Resonanzübertrager genau drei der akustischen Resonanzübertragungselemente auf, wobei davon zwei akustische Resonanzübertragungselemente jeweils an den Enden der flexiblen Aufhängung fixiert sind und ein akustisches Resonanzübertragungselement zwischen den fixierten akustischen Resonanzübertragungselementen an der flexiblen Aufhängung verschiebbar angeordnet ist.

Alternativ zur letztgenannten Ausführungsform weist der akustische Resonanzübertrager genau vier der akustischen Resonanzübertragungselemente auf, wobei davon zwei akustische Resonanzübertragungselemente jeweils an den Enden der flexiblen Aufhängung fixiert sind und zwei akustische Resonanzübertragungselemente zwischen den fixierten akustischen Resonanzübertragungselementen an der flexiblen Aufhängung verschiebbar angeordnet sind.

Vorteilhafterweise sind die akustischen Resonanzübertragungselemente aus Gummi hergestellt.

Alternativ oder zusätzlich sind die akustischen Resonanzübertragungselemente aus Silikon hergestellt.

Bei dem Verfahren zur Klangoptimierung eines Flügels kann außerdem vorgesehen sein, dass das Verfahren ferner die Schritte umfasst: Anordnen eines zweiten akustischen Resonanzübertragers gemäß der Erfindung schallankoppelnd zwischen dem Korpus und dem Vorderdeckel des Flügels, an einer Seite, die dem ersten Scharnier gegenüberliegt, e) Verschieben von mindestens einem der verschiebbaren akustischen Resonanzübertragungselemente des zweiten akustischen Resonanzübertragers von einer Ausgangsposition an eine Position, an der eine Lautstärke eines durch Spielen des Flügels auf eine gleiche Weise wie in Schritt b) erzeugten Tons relativ zu dem in Schritt b) erzeugten Ton verstärkt ist und/oder Oberton-Resonanzen des erzeugten Tons relativ zu dem in Schritt b) erzeugten Ton reduziert sind.

Alternativ kann bei dem Verfahren zur Klangoptimierung eines Flügels vorgesehen sein, dass das Verfahren ferner den Schritt umfasst: f) Aufstellen des Hauptdeckels in einem Winkel zwischen 30° bis 60° zur Horizontalen über das erste Scharnier.

Der Erfindung liegt die überraschende Erkenntnis zu Grunde, dass der Deckel eines besaiteten Tasteninstruments, insbesondere ein Klavier oder Flügel, durch einen erfindungsgemäßen akustischen Resonanzübertrager eine Resonanz des Grundtons verstärken kann und/oder Oberton-Resonanzen verringert werden können.

Weitere Merkmale und Vorteile der Erfindung ergeben sich aus den beigefügten Ansprüchen und der nachfolgenden Beschreibung, in der anhand der schematischen Zeichnungen mehrere Ausführungsbeispiele der vorliegenden Erfindung beschrieben werden. Dabei zeigt/zeigen:
- Figur 1: eine schematische Darstellung von einem akustischen Resonanzübertrager mit drei kugelförmigen akustischen Resonanzübertragungselementen gemäß einer besonderen Ausführungsform der Erfindung;
- Figur 2: eine schematische Darstellung von einem akustischen Resonanzübertrager mit drei zylinderförmigen akustischen Resonanzübertragungselementen jeweils in Längsausrichtung zur Längserstreckung des Resonanzübertragers gemäß einer weiteren besonderen Ausführungsform der Erfindung;
- Figur 3: eine schematische Darstellung von einem akustischen Resonanzübertrager mit drei zylinderförmigen akustischen Resonanzübertragungselementen in Querausrichtung zur Längserstreckung des Resonanzübertragers gemäß einer weiteren besonderen Ausführungsform der Erfindung;
- Figur 4: eine beispielhafte perspektivische Ansicht der Mechanik zur Resonanzerzeugung in einem Flügel;
- Figur 5: eine Seitenansicht eines Flügels mit aufgeklapptem Vorderdeckel und Hauptdeckel und einem zwischen dem Vorderdeckel und Hauptdeckel angeordneten akustischen Resonanzübertrager gemäß einer besonderen Ausführungsform der Erfindung;
- Figur 6: eine Vorderansicht des Flügels von Figur 5 mit aufgeklapptem Vorderdeckel und Hauptdeckel und einem zwischen dem Vorderdeckel und Hauptdeckel angeordneten akustischen Resonanzübertrager;
- Figur 7: eine perspektivische Ansicht des Flügels mit aufgeklapptem Vorderdeckel und Hauptdeckel und einem zwischen dem Vorderdeckel und Hauptdeckel angeordneten akustischen Resonanzübertrager gemäß einer besonderen Ausführungsform der vorliegenden Erfindung;
- Figur 8: eine vergrößerte Ansicht eines Vorderdeckels, eines Hauptdeckels und der Rimm eines Flügels mit zwei akustischen Resonanzübertragern in perspektivischer Ansicht von schräg oben;
- Figur 9: eine Seitenansicht eines Flügels mit einem akustischen Resonanzübertrager zwischen einem Vorderdeckel und einem Hauptdeckel des Flügels und einem zweiten akustischen Resonanzübertrager zwischen einem Korpus des Flügels und dem Hauptdeckel;
- Figur 10: eine schematische Darstellung von einem zylinderförmigen akustischen Resonanzübertragungselement, das nicht zur Erfindung gehört.

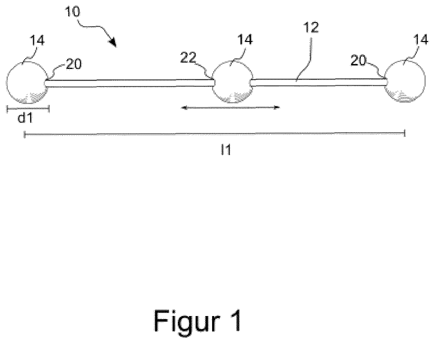

Figur 1 zeigt eine schematische Darstellung von einem akustischen Resonanzübertrager 10, umfassend eine flexible Aufhängung 12 und drei akustische Resonanzübertragungselemente 14, die an der flexiblen Aufhängung angeordnet sind. Von den drei akustischen Resonanzübertragungselementen 14 sind zwei akustische Resonanzübertragungselemente 14 an den Enden der flexiblen Aufhängung 12 fixiert. Das dritte akustische Resonanzübertragungselement 14 ist verschiebbar an der flexiblen Aufhängung 12 zwischen den fixierten akustischen Resonanzübertragungselementen 14 angeordnet. Der akustische Resonanzübertrager 10 dient zur Kopplung von Resonanzen zwischen zwei Bauteilen des Klaviers. Der akustische Resonanzübertrager 10 kann grundsätzlich mehrere akustische Resonanzübertragungselemente 14 aufweisen. Das akustische Resonanzübertragungselement 14 ist dazu eingerichtet, bei einem mechanischen Kontakt, also einer Kopplung, mit einem Bauteil von einer Resonanz im Bauteil in Schwingung versetzt zu werden und diese Schwingung an ein anderes Bauteil zu übertragen.

Die akustischen Resonanzübertragungselemente 14 sind in diesem Beispiel kugelförmig und beispielsweise gleich groß und weisen einen Kugeldurchmesser d1 auf. Der Kugeldurchmesser d1 beträgt vorzugsweise zwischen 3 cm und 15 cm, besonders bevorzugt zwischen 5 cm und 10 cm. Die Kugelform ermöglicht durch kleine Auflagepunkte eine genaue Positionierung der akustischen Resonanzübertragungselemente 14 und durch die hohe Symmetrie einer Kugel gute Schwingungseigenschaften. Die Kugelform ermöglicht im Einsatz an einem Klavier ferner eine geringe Dämpfung von langwelligen und kurzwelligen Resonanzen, wodurch das Klavier in seinen natürlichen Klanganteilen verstärkt wird.

Die fixierten akustischen Resonanzübertragungselemente 14 sind durch geeignete Mittel an jeweils einem Ende der flexiblen Aufhängung 12 befestigt. Hierzu können die fixierten akustischen Resonanzübertragungselemente 14 beispielsweise eine nicht-durchgehende Bohrung 20 aufweisen, in die die flexible Aufhängung 12 eingeführt ist und mit einem geeigneten Befestigungsmittel (nicht gezeigt) befestigt ist. Das Befestigungsmittel kann beispielsweise ein Klebemittel oder ein Klemmmittel sein. Das verschiebbare akustische Resonanzübertragungselement 14 befindet sich zwischen den fixierten akustischen Resonanzübertragungselementen 14 und ist über eine durchgehende Bohrung 22, die durch den Mittelpunkt des kugelförmigen akustischen Resonanzübertragungselements 14 verläuft, an der flexiblen Aufhängung 12 verschiebbar angeordnet, was durch den unter dem verschiebbaren akustischen Resonanzübertragungselement 14 befindlichen Pfeil angedeutet ist. Weiterhin ist möglich, dass mindestens ein weiteres verschiebbares akustisches Resonanzübertragungselement 14 in gleicher Weise wie das gezeigte verschiebbare akustische Resonanzübertragungselement 14 zusätzlich entlang der flexiblen Aufhängung 12 angeordnet ist.

Die flexible Aufhängung 12 ist in ihrer Form flexibel und/oder in ihrer Länge variabel ist und kann dazu dienen, die akustischen Resonanzübertragungselemente an ihr anzuordnen und/oder zu befestigen. Die flexible Aufhängung kann beispielsweise eine Schnur, ein Seil, ein Draht, eine Leine oder eine Schiene sein. Die flexible Aufhängung 12 kann weiterhin Natur- oder Kunstfasern umfassen. Die Länge 11 des akustischen Resonanzübertragers 10 beträgt vorzugsweise zwischen 50 cm und 3 m, besonders bevorzugt zwischen 80 cm und 1,5 m. Hierdurch kann der akustische Resonanzübertrager 10 an verschieden großen Klavieren in unterschiedlicher Weise eingesetzt werden.

Die akustischen Resonanzübertragungselemente 14 bestehen vorzugsweise aus einem Material, das eine gute Übertragung der Resonanzen ermöglicht. Hierzu sollte das Material keine zu starken Dämpfungseigenschaften aufweisen und einen stabilen Kontakt zu Bauteilen eines beasaiteten Tasteninstruments ermöglichen. Vorzugsweise umfassen die Materialien der akustischen Resonanzübertragungselemente 14 Gummi und/oder Silikon, besonders bevorzugt bestehen die akustischen Resonanzübertragungselemente 14 aus Gummi und/oder Silikon.

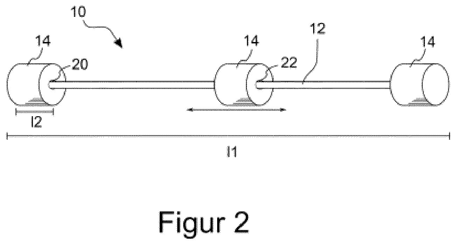

Figur 2 zeigt eine schematische Darstellung von einem akustischen Resonanzübertrager 10 gemäß einer weiteren besonderen Ausführungsform der Erfindung. Der akustische Resonanzübertrager 10 gemäß der in Figur 2 dargestellten Ausführungsform der Erfindung entspricht in wesentlichen Teilen dem akustischen Resonanzübertrager 10 gemäß der in Figur 1 dargestellten Ausführungsform der Erfindung. In der in Figur 2 gezeigten Ausführungsform sind ebenfalls drei akustische Resonanzübertragungselemente 14 an einer flexiblen Aufhängung 12 angeordnet. Zwei akustische Resonanzübertragungselemente 14 sind an jeweils einem Ende der flexiblen Aufhängung 12 angeordnet. Ein weiteres akustisches Resonanzübertragungselement 14 ist verschiebbar an der flexiblen Aufhängung 12 zwischen den fixierten akustischen Resonanzübertragungselementen 14 angeordnet. Im Unterschied zu der in Figur 1 gezeigten Ausführungsform weisen die akustischen Resonanzübertragungselemente 14 eine Zylinderform auf und sind jeweils in Längsausrichtung zur Längserstreckung des Resonanzübertragers entlang der flexiblen Aufhängung 12 angeordnet.

Die fixierten akustischen Resonanzübertragungselemente 14 weisen ebenfalls eine nicht-durchgehende Bohrung 20 auf, in welcher die flexible Aufhängung 12 mit einem geeigneten Befestigungsmittel befestigt ist. Das verschiebbare akustische Resonanzübertragungselement 14 weist eine durchgehende Bohrung 22 entlang seiner Achse auf, in der die flexible Aufhängung 12 angeordnet ist und somit die Zylinderachse des verschiebbaren akustischen Resonanzübertragungselements 14 mit der Längsachse der flexiblen Aufhängung 12 zusammenfällt. Eine Zylinderachsenlänge l2 beträgt vorzugsweise zwischen 3 cm und 15 cm, besonders bevorzugt zwischen 5 cm und 10 cm. Durch die Längsanordnung der akustischen Resonanzübertragungselemente 14 und der flexiblen Aufhängung 12 werden im Einsatz des akustischen Resonanzübertragers 10 an einem Klavier oder Flügel 32 kurzwellige Resonanzen gedämpft, während langwellige Resonanzen dämpfungsfrei oder dämpfungsarm übertragen werden. Hierdurch werden die Bass-Anteile des Klaviers oder Flügels 32 verstärkt.

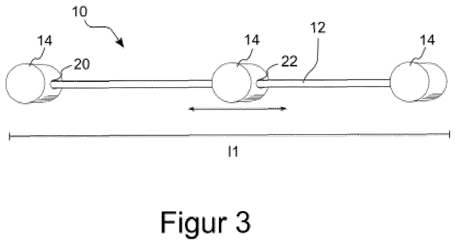

Figur 3 zeigt eine schematische Darstellung eines akustischen Resonanzübertragers gemäß einer weiteren besonderen Ausführungsform der Erfindung. Der Resonanzübertrager 10 gemäß der in Figur 3 dargestellten Ausführungsform entspricht im Wesentlichen dem akustischen Resonanzübertrager 10 gemäß Figur 2. In der in Figur 3 gezeigten Ausführungsform sind ebenfalls drei zylinderförmige akustische Resonanzübertragungselemente 14 an einer flexiblen Aufhängung 12 angeordnet. Zwei akustische Resonanzübertragungselemente 14 sind an jeweils einem Ende der flexiblen Aufhängung 12 fixiert. Ein weiteres akustisches Resonanzübertragungselement 14 ist verschiebbar an der flexiblen Aufhängung 12 zwischen den fixierten akustischen Resonanzübertragungselementen 14 angeordnet. Im Unterschied zu der in Figur 2 gezeigten Ausführungsform sind die akustischen Resonanzübertragungselemente 14 in der in Figur 3 gezeigten besonderen Ausführungsform der Erfindung jeweils in Querausrichtung zur Längserstreckung des Resonanzübertragers entlang der flexiblen Aufhängung 12 angeordnet. Durch die Querausrichtung der akustischen Resonanzübertragungselemente 14 relativ zur flexiblen Aufhängung 12 werden im Einsatz des akustischen Resonanzübertragers 10 in dieser Ausführungsform an einem Klavier oder Flügel 32 langwellige Resonanzen gedämpft, während kurzwellige Resonanzen dämpfungsfrei oder dämpfungsarm übertragen werden. Hierdurch werden die Diskant-Anteile des Klaviers oder Flügels 32 verstärkt.

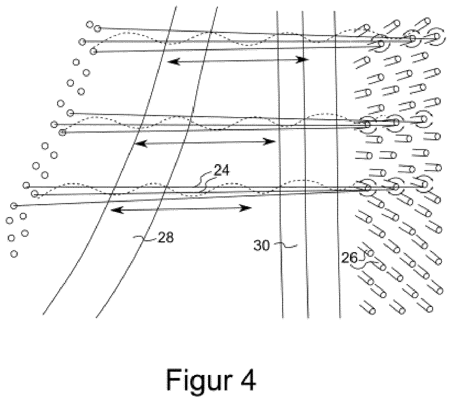

Figur 4 zeigt eine beispielhafte perspektivische Ansicht zur Resonanzerzeugung in einem Flügel 32. In diesem befinden sich die Saiten 24, die durch Anschlag mit einem Hammer (nicht gezeigt) in Schwingung versetzt werden, was durch die gestrichelten, wellenförmigen Linien angedeutet ist. Die Saiten 24 sind an einem Ende an den drehbaren Stimmwirbeln 26 befestigt. Die Schwingungen der Saiten verlaufen über den Resonanzsteg 28 und den Siliensteg 30. Die Schwingungen erzeugen Resonanzen, also Schwingungen von Bauteilen des Flügels mit der Schwingung der angeschlagenen Saite.

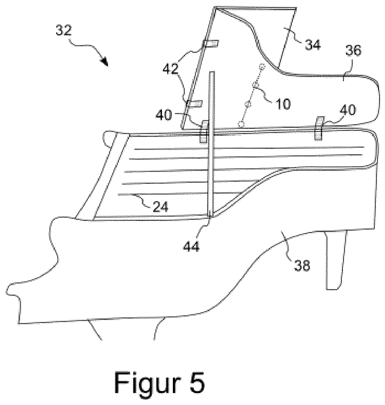

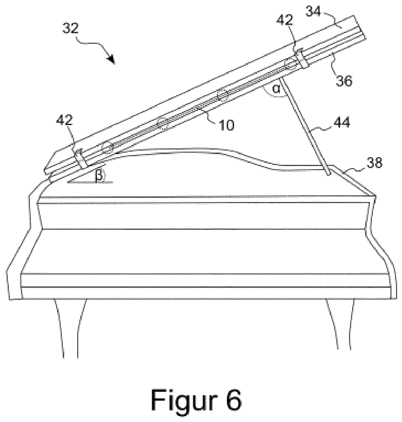

Die Figuren 5 und 6 zeigen einen Flügel 32 mit einem aufgeklapptem Vorderdeckel 34 und einem Hauptdeckel 36 und einem zwischen dem Vorderdeckel 34 und Hauptdeckel 36 angeordneten akustischen Resonanzübertrager 10 gemäß einer besonderen Ausführungsform der Erfindung in einer bevorzugten Anwendung.

Figur 5 zeigt eine Seitenansicht des Flügels 32. Der Flügel 32 weist einen Korpus 38 und einen über ein zweiteiliges erstes Scharnier 40 mit dem Korpus 38 verbundenen Hauptdeckel 36 auf. Der Vorderdeckel 34 ist über ein zweiteiliges zweites Scharnier 42 mit dem Hauptdeckel 36 verbunden. Der Hauptdeckel 36 ist über eine Deckelstütze 44 aufgestellt. In dem Flügel 32 wird eine akustische Resonanz, bzw. ein Ton, wie in Verbindung mit Figur 4 beschrieben, über den Anschlag der Saiten 24 erzeugt. Eine Resonanzübertragung findet unter anderem durch Kopplung zwischen dem Korpus 38 und dem Hauptdeckel 36 über das erste Scharnier 40 und über die Deckelstütze 44 statt. Über das zweite Scharnier 42 findet eine weitere Resonanzübertragung zwischen dem Hauptdeckel 36 und dem Vorderdeckel 34 statt. Durch den zwischen Hauptdeckel 36 und Vorderdeckel 34 angeordneten akustischen Resonanzübertrager 10 lässt sich in diesem Anwendungsbeispiel die Resonanzübertragung zwischen Hauptdeckel 36 und Vorderdeckel 34 verändern. Bevorzugt ist der akustische Resonanzübertrager 10 parallel zu einer durch das zweite Scharnier 42 definierten Gerade angeordnet. Hierdurch wird gewährleistet, dass möglichst alle akustischen Resonanzübertragungselemente 14 des akustischen Resonanzübertragers 10 einen physischen Kontakt zwischen Vorderdeckel 34 und Hauptdeckel 36 herstellen. Insbesondere bei akustischen Resonanzübertragern 10 mit unterschiedlich großen und/oder individuell an das Instrument angepassten akustischen Resonanzübertragungselementen sind aber auch andere Anordnungen möglich. Durch Verschieben der verschiebbaren akustischen Resonanzübertragungselemente entlang dieser Gerade lässt sich die Resonanzübertragung weiter anpassen.

Welche Position eine optimale Resonanzübertragung ermöglicht, lässt sich durch Spielen des Flügels mit einem schallankoppelnd am Flügel angeordneten akustischen Resonanzübertrager 10 und Erzeugen eines Tons feststellen. Der Ton wird mit Tönen verglichen, die vom Flügel 32 ohne einen akustischen Resonanzübertrager 10, oder mit einem in anderer Weise angeordneten akustischen Resonanzübertrager 10, in ansonsten gleicher Weise erzeugt worden sind. Durch den Vergleich der Lautstärke, und/oder der Obertonresonanzen zwischen den Tönen lässt sich die Position des akustischen Resonanzübertragungselements derart optimieren, sodass die Lautstärke erhöht, und/oder Obertonresonanzen reduziert werden.

Vorzugsweise werden die akustischen Resonanzübertragungselemente 14 an Positionen der Deckelfläche und/oder an Positionen des Korpus angeordnet, an denen Schwingungsbäuche der Resonanzen entstehen. Hierzu können die verschiebbaren akustischen Resonanzübertragungselemente 14 an Positionen der flexiblen Aufhängung 12 angeordnet werden, welche die Länge l1 des akustischen Resonanzübertragers 10 in einfachen ganzzahligen Verhältnissen oder im Verhältnis des goldenen Schnitts teilen. Als einfaches ganzzahliges Verhältnis wird ein Verhältnis, das über a/b ausgedrückt werden kann, verstanden, wobei a und b einstellige ganze Zahlen sind.

Figur 6 zeigt eine Vorderansicht des Flügels 32. Hierbei schließt die Deckelstütze 44 mit dem Hauptdeckel 36 einen Winkel α ein, wodurch der Hauptdeckel 36 mit einer Waagerechten einen Winkel β einschließt. Der Winkel β beträgt vorzugsweise zwischen 30° und 60°, besonders bevorzugt zwischen 40° und 55°. Hierdurch wird gewährleistet, dass der Vorderdeckel 34 eine ausreichende Gewichtskraft auf den akustischen Resonanzübertrager 10 und den Hauptdeckel 36 ausübt. Weiterhin wird durch die Wahl des Winkels β in den genannten Bereichen ebenfalls eine ausreichende Gewichtskraft auf die Deckelstütze 44 und das in Figur 4 gezeigte erste Scharnier 40 ausgeübt, wodurch eine ausreichende Resonanzübertragung zwischen Korpus 38 des Flügels 32 und dem Hauptdeckel 36 und Vorderdeckel 34 gewährleistet wird. Der akustische Resonanzübertrager 10 überträgt somit die Resonanz der angeschlagenen Saite in den Hauptdeckel auf besonders effektive Weise.

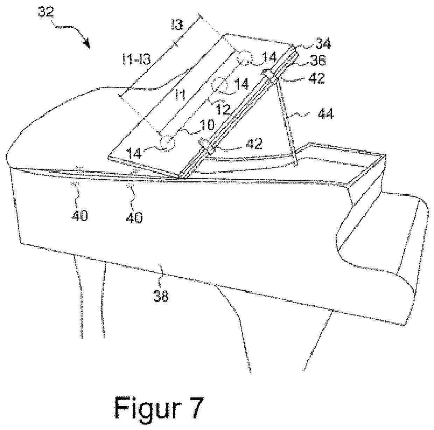

Figur 7 zeigt eine perspektivische Ansicht des Flügels 32 mit aufgeklapptem Vorderdeckel 34 und Hauptdeckel 36 und einem zwischen dem Vorderdeckel 34 und Hauptdeckel 36 angeordneten akustischen Resonanzübertrager 10. Der hier gezeigte akustische Resonanzübertrager 10 entspricht dem in Figur 1 gezeigten akustischen Resonanzübertrager 10, umfassend die flexible Aufhängung 12, ein erstes und ein zweites akustisches Resonanz¬über¬tragungs¬element 14, die jeweils an einem Ende der flexiblen Aufhängung 12 fixiert sind, und ein drittes akustisches Resonanzübertragungselement 14, das verschiebbar an der flexiblen Aufhängung 12 angeordnet ist. Die Länge l1 des akustischen Resonanzübertragers 10 wird durch das verschiebbare akustische Resonanz¬über¬tra¬gungs¬element 14 in einen Abstand l3, zwischen dem ersten fixierten Reso¬nanz¬über¬tra¬gungs¬element 14 und dem verschiebbaren dritten akustischen Resonanzübertragungselement 14 und einen Abstand l1 l3, zwischen dem fixierten zweiten Resonanzübertragungselement 14 und dem dritten verschiebbaren akustischen Resonanzübertragungselement 14 geteilt. Vorzugsweise werden die akustischen Resonanzübertragungselemente 14 an Positionen der Deckelfläche angeordnet, an denen Schwingungsbäuche und/oder Schwingungsknoten der Resonanzen entstehen. Hierzu kann das verschiebbare akustische Resonanzübertragungselement 14 beispielsweise an eine Position der flexiblen Aufhängung 12 angeordnet werden, an der ein Verhältnis (l1-l3)/l3 dem goldenen Schnitt, oder einem einfachen ganzzahligen Verhältnis entspricht.

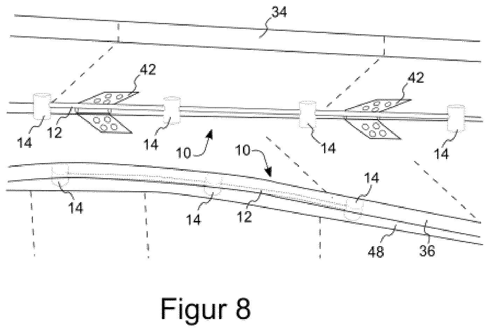

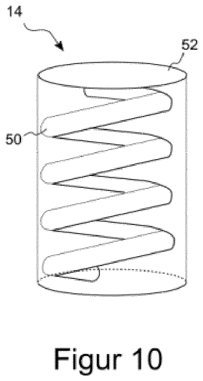

Figur 8 zeigt eine perspektivische Ansicht eines Vorderdeckels 34, eines Hauptdeckels 36 und der Rimm 48 eines Flügels 32 mit zwei akustischen Resonanzübertragern 10 von schräg oben. In diesem Anwendungsbeispiel ist der Vorderdeckel 34 über die Scharniere 42 zum Hauptdeckel 36 hin aufgeklappt und schließt mit dem Hauptdeckel 36 einen spitzen Winkel ein. Die perspektivische Ansicht liefert einen Blick von schräg oben in die Winkelöffnung. Ein akustischer Resonanzübertrager 10 mit vier Resonanzübertragungselementen 14 ist zwischen dem Hauptdeckel 36 und dem Vorderdeckel 34 angeordnet. Der Vorderdeckel 34 liegt auf dem akustischen Resonanzübertrager 10 auf. Ein weiterer akustischer Resonanzübertrager 10 mit drei Resonanzübertragungselementen 14 an einer flexiblen Aufhängung 12 ist auf der Rimm 48 des Flügels 32 angeordnet, wobei der Hauptdeckel 36 auf diesem akustischen Resonanzübertrager 10 aufliegt. Aus dem in Figur 8 gezeigten Blickwinkel befinden sich Teile des auf der Rimm 48 angeordneten akustischen Resonanzübertragers 10 unterhalb des Hauptdeckels 36. Die unterhalb des Hauptdeckels 36 befindlichen Teile sind gestrichelt dargestellt. Die in diesem Anwendungsbeispiel dargestellten Resonanzübertragungselemente 14 sind zylinderförmig und werden in Zusammenhang mit Figur 10 näher beschrieben.

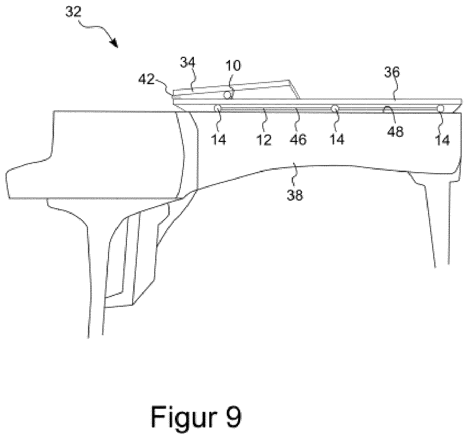

Figur 9 zeigt ein weiteres Anwendungsbeispiel der Erfindung. Es ist eine Seitenansicht eines Flügels 32 gezeigt, wobei ein akustischer Resonanzübertrager 10 zwischen dem Vorderdeckel 34 und dem Hauptdeckel 36 und ein zweiter akustischer Resonanzübertrager 46 zwischen dem Korpus 38 und dem Hauptdeckel 36 angeordnet ist. Die Anordnung des akustischen Resonanzübertragers 10 entspricht einer Anwendung gemäß der Figuren 4, 5 und 6. Der zweite akustische Resonanzübertrager 46 ist auf einer Rimm 48 des Flügels 32 angeordnet. Die Rimm 48 hat einen gebogenen Verlauf. Der Verlauf des zweiten akustischen Resonanzübertragers 46 ist durch Anpassung der flexiblen Aufhängung 12 dem Verlauf der Rimm 48 angepasst.

Figur 9 zeigt einen zweiten akustischen Resonanzübertrager 46 mit drei akustischen Resonanzübertragungselementen 14. Es kann aber auch ein zweiter akustischer Resonanzübertrager 46 mit mehr oder weniger akustischen Resonanzübertragungselementen 14 verwendet werden. Entsprechendes gilt auch für den akustischen Resonanzübertrager 10 und die in den Figuren 5 bis 8 gezeigten Anwendungsbeispielen. Im Unterschied zu den zuvor gezeigten Anwendungsbeispielen wird hier eine Resonanz nun nicht mehr vom Korpus 38 über das erste Scharnier 40 und die Deckelstütze 44 auf den Hauptdeckel 36 übertragen. Stattdessen wird eine Resonanz vom Korpus 38 über das erste Scharnier 40 und den zweiten akustischen Resonanzübertrager 46 auf den Hauptdeckel 36 übertragen und vom Hauptdeckel 36 über den akustischen Resonanzübertrager 10 auf den Vorderdeckel 34.

Wie in Zusammenhang mit Figur 8 beschrieben, werden auch bei dem in Figur 9 gezeigten Anwendungsbeispiel die akustischen Resonanzübertragungselemente des akustischen Resonanzübertragers 10 und des zweiten akustischen Resonanzübertragers 46 an Positionen angeordnet, an denen Schwingungsbäuche der Resonanzen entstehen. Hierzu wird das verschiebbare akustische Resonanzübertragungselement 14 vorzugsweise an eine Position der flexiblen Aufhängung 12 angeordnet, an der ein Verhältnis (l1-l3)/l3 dem goldenen Schnitt oder einem einfachen ganzzahligen Verhältnis entspricht. Durch Spielen des Flügels und somit Erzeugen eines Tons und anschließendem Verschieben des verschiebbaren akustischen Resonanzübertragungselements 14 an eine Position, an der eine Lautstärke des Tons im Vergleich zu einem auf ansonsten gleiche Weise zuvor erzeugten Ton verstärkt ist und/oder Oberton-Resonanzen des erzeugten Tons zu einem auf ansonsten gleiche Weise erzeugten Ton reduziert sind, lässt sich die optimale Position des akustischen Resonanzübertragers 10, des zweiten akustischen Resonanzübertragers 46 und des verschiebbaren akustischen Resonanzübertragungselements 14 ermitteln.

In ähnlicher Weise kann ein akustischer Resonanzübertrager 10 auch bei einem Klavier zwischen dem Korpus des Klaviers und einem Deckel des Klaviers auf einer Seite angeordnet werden, die dem zweiten Scharnier 42 gegenüberliegt. Die Positionierung des akustischen Resonanzübertragers 10 und dem verschiebbaren akustischen Resonanzübertragungselement 14 erfolgt in gleicher Weise wie bei den oben beschriebenen Anwendungsbeispielen am Flügel 32.

Figur 10 zeigt eine schematische Darstellung von einem zylinderförmigen akustischen Resonanzübertragungselement 14, das nicht Teil der Erfindung ist. Das Resonanzübertragungselement 14 umfasst eine Spiralfeder 50 und eine Ummantelung 52. Die Spiralfeder 50 ist von der Ummantelung 52 vollständig umschlossen. Die Spiralfeder 50 ist vorzugsweise aus einem Metall hergestellt und hat eine Federkonstante k. Die Ummantelung 52 kann beispielsweise aus Gummi, Silikon oder einem Kunststoff hergestellt sein. Das Resonanzübertragungselement 14 kann ferner ein Befestigungsmittel (nicht gezeigt) zum Befestigen des Resonanzübertragungselements 14 an einem Korpus 38 von einem Klavier und/oder einem Klavierdeckel aufweisen. Ein akustischer Resonanzübertrager 10, der nicht zur Erfindung gehört, umfasst zwei oder mehr dieser Resonanzübertragungselemente 14.

Durch die Ummantelung 52 und/oder das Befestigungsmittel wird ein stabiler Kontakt zwischen dem Korpus und/oder Klavierdeckel hergestellt. Die Spiralfeder 52 ermöglicht die Übertragung der Resonanzen zwischen dem Korpus 38 von dem Klavier und dem Klavierdeckel. In dieser mit zur Erfindung gehörenden Ausführungsform ist es insbesondere möglich, die Stärke der Resonanzübertragung durch Einsatz von Resonanzübertragungselementen 14 mit unterschiedlichen Federkonstanten k beispielsweise an das Instrument, einen Konzertraum und/oder eine Spielweise eines Pianisten anzupassen. Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: akustischer Resonanzübertrager
- 12: flexible Aufhängung
- 14: akustisches Resonanzübertragungselement
- 20: nicht-durchgehende Bohrung
- 22: durchgehende Bohrung
- 24: Saiten
- 26: Stimmwirbel
- 28: Resonanzsteg
- 30: Siliensteg
- 32: Flügel
- 34: Vorderdeckel
- 36: Hauptdeckel
- 38: Korpus
- 40: erstes Scharnier
- 42: zweites Scharnier
- 44: Deckelstütze
- 46: Zweiter akustischer Resonanzübertrager
- 48: Rimm
- 50: Spiralfeder
- 52: Ummantelung
- d1: Kugeldurchmesser
- l1: Länge des akustischen Resonanzübertragers
- l2: Zylinderachsenlänge
- l3: Abstand zwischen dem ersten fixierten akustischen Resonanzübertragungselement und dem dritten verschiebbaren akustischen Resonanzübertragungselement

## Patentansprüche

1. Akustischer Resonanzübertrager (10) umfassend:
eine flexible Aufhängung (12), und
zwei oder mehr akustische Resonanzübertragungselemente (14), die an der flexiblen Aufhängung (12) angeordnet sind,
**dadurch gekennzeichnet, dass** mindestens eines der akustischen Resonanzübertragungselemente (14) an der flexiblen Aufhängung (12) verschiebbar angeordnet ist, wobei die Resonanzübertragungselemente (14)
eingerichtet sind, zwischen einem Hauptdeckel (36) und einem Vorderdeckel (34) eines Flügels (32) oder zwischen einer Rimm (48) eines Korpus (38) eines Flügels (32) und einem Hauptdeckel (36) des Flügels oder einem Korpus (38) und einem über ein Scharnier an dem Korpus (38) befestigten Klavierdeckel eines
Klaviers angeordnet zu werden und so einen physischen Kontakt zwischen dem Hauptdeckel (36) und dem Vorderdeckel (34) oder der Rimm (48) und
dem Hauptdeckel (36) des Flügels (32) oder dem Korpus und dem Klavierdeckel des Klaviers zur Schallkopplung herzustellen.

2. Akustischer Resonanzübertrager (10) nach Anspruch 1, wobei mindestens eines der akustischen Resonanzübertragungselemente (14) kugelförmig ist und einen Kugeldurchmesser d1 aufweist sowie so an der flexiblen Aufhängung (12) angeordnet ist, dass der Kugeldurchmesser d1 mit einer Längsachse der flexiblen Aufhängung (12) zusammenfällt.

3. Akustischer Resonanzübertrager (10) nach Anspruch 1, wobei mindestens eines der akustischen Resonanzübertragungselemente (14) zylinderförmig ist und eine Zylinderachse aufweist sowie so an der flexiblen Aufhängung (12) angeordnet ist, dass die Zylinderachse des akustischen Resonanzübertragungselements (14) mit einer Längsachse der flexiblen Aufhängung (12) zusammenfällt.

4. Akustischer Resonanzübertrager (10) nach Anspruch 1, wobei mindestens eines der akustischen Resonanzübertragungselemente (14) zylinderförmig ist und eine Zylinderachse aufweist sowie so an der flexiblen Aufhängung (12) angeordnet ist, dass die Zylinderachse des akustischen Resonanzübertragungselements (14) senkrecht zu einer Längsachse der flexiblen Aufhängung (12) ausgerichtet ist.

5. Akustischer Resonanzübertrager (10) nach Anspruch 3 oder 4, wobei mindestens eines der akustischen Resonanzübertragungselemente (14) eine Zylinderachsenlänge l2 im Bereich von 3 cm und 15 cm aufweist.

6. Akustischer Resonanzübertrager (10) nach einem der vorhergehenden Ansprüche,
wobei er genau drei der akustischen Resonanzübertragungselemente (14) aufweist,
wobei davon zwei akustische Resonanzübertragungselemente (14) jeweils an den Enden der flexiblen Aufhängung (12) fixiert sind und
ein akustisches Resonanzübertragungselement (14) zwischen den fixierten akustischen Resonanzübertragungselementen (14) an der flexiblen Aufhängung (12) verschiebbar angeordnet ist.

7. Akustischer Resonanzübertrager (10) nach einem der Ansprüche 1 bis 5, wobei er genau vier der akustischen Resonanzübertragungselemente (14) aufweist,
wobei davon zwei akustische Resonanzübertragungselemente (14) jeweils an den Enden der flexiblen Aufhängung (12) fixiert sind und
zwei akustische Resonanzübertragungselemente (14) zwischen den fixierten akustischen Resonanzübertragungselementen (14) an der flexiblen Aufhängung (12) verschiebbar angeordnet sind.

8. Akustischer Resonanzübertrager (10) nach einem der vorhergehenden Ansprüche, wobei die akustischen Resonanzübertragungselemente (14) aus Gummi hergestellt sind.

9. Akustischer Resonanzübertrager (10) nach einem der vorhergehenden Ansprüche, wobei die akustischen Resonanzübertragungselemente (14) aus Silikon hergestellt sind.

10. Klavier, das einen Korpus (38), einen über ein Scharnier an dem Korpus (38) befestigten Klavierdeckel, und einen akustischen Resonanzübertrager (10) nach einem der vorhergehenden Ansprüche aufweist, der zwischen dem Korpus und dem Klavierdeckel schallankoppelnd angeordnet ist, wobei die Resonanzübertragungselemente (14) physisch in Kontakt mit dem Korpus (38) und dem Klavierdeckel stehen.

11. Flügel (32), der einen Korpus (38) mit einer Rimm (48), einen Hauptdeckel (36), einen über ein Scharnier (42) an dem Hauptdeckel (36) befestigten Vorderdeckel (34) und einen akustischen Resonanzübertrager (10) nach einem der Ansprüche 1 bis 9 aufweist, der entweder zwischen dem Hauptdeckel (36) und dem Vorderdeckel (34) schallankoppelnd angeordnet ist, wobei die Resonanzübertragungselemente (14) physisch in Kontakt mit dem Hauptdeckel (36) und dem Vorderdeckel (34) stehen, und/oder zwischen der Rimm (48) des Korpus (38) des Flügels (32) und dem Hauptdeckel (36) des Flügels (32) schallankoppelnd angeordnet ist, wobei die Resonanzübertragungselemente (14) physisch in Kontakt mit der Rimm (48) und dem Hauptdeckel (36) stehen.

12. Verfahren zur Klangoptimierung eines Klaviers, das einen Korpus (38) und einen über ein Scharnier an dem Korpus (38) befestigten Klavierdeckel aufweist, umfassend die Schritte:
a) Anordnen eines akustischen Resonanzübertragers (10) nach einem der Ansprüche 1 bis 9 schallankoppelnd zwischen dem Korpus (38) und dem Klavierdeckel an einer Seite, die dem Scharnier gegenüberliegt, wobei die Resonanzübertragungselemente (14) in physischem Kontakt mit dem Korpus und dem Klavierdeckel stehen,
b) Erzeugen eines Tons durch Spielen des Klaviers, und
c) Verschieben von mindestens einem der verschiebbaren akustischen Resonanzübertragungselemente (14) von einer Ausgangsposition an eine Position, an der eine Lautstärke eines durch Spielen des Klaviers auf eine gleiche Art wie in Schritt b) erzeugten Tons relativ zu dem in Schritt b) erzeugten Ton verstärkt ist und/oder Oberton-Resonanzen des erzeugten Tons relativ zu dem in Schritt b) erzeugten Ton reduziert sind.

13. Verfahren zur Klangoptimierung eines Flügels (32), der einen Korpus (38) mit einer Rimm (48) und einen über ein erstes Scharnier (40) an dem Korpus (38) befestigten Hauptdeckel (36) sowie einen über ein zweites Scharnier (42) an dem Hauptdeckel (36) befestigten Vorderdeckel (34) aufweist, umfassend die Schritte:
a) Anordnen eines akustischen Resonanzübertragers (10) nach einem der Ansprüche 1 bis 9 schallankoppelnd entweder zwischen dem Vorderdeckel (34) und dem Hauptdeckel (36), wobei die Resonanzübertragungselemente (14) in physischem Kontakt mit dem Hauptdeckel (36) und dem Vorderdeckel (34) stehen, und/oder zwischen der Rimm (48) des Korpus (38) des Flügels (32) und dem Hauptdeckel (36), wobei die Resonanzübertragungselemente (14) physisch in Kontakt mit der Rimm (48) und dem Hauptdeckel (36) stehen,
b) Erzeugen eines Tons durch Spielen des Flügels (32), und
c) Verschieben von mindestens einem der verschiebbaren akustischen Resonanzübertragungselemente von einer Ausgangsposition an eine Position, an der eine Lautstärke eines durch Spielen des Flügels (32) auf eine gleiche Weise wie in Schritt b) erzeugten Tons relativ zu dem in Schritt b) erzeugten Ton verstärkt ist und/oder Oberton-Resonanzen des erzeugten Tons relativ zu dem in Schritt b) erzeugten Ton reduziert sind.

## Claims

1. Acoustic resonance transformer (10) comprising:
a flexible suspension (12), and
two or more acoustic resonance transformation elements (14) arranged on the flexible suspension (12),
**characterized in that** at least one of the acoustic resonance transformation elements (14) is arranged on the flexible suspension (12) in a movable manner, wherein
the resonance transformation elements (14) are configured to be arranged between a main lid (36) and a front lid (34) of a grand piano (32) or between a rim (48) of a body (38) of a grand piano (32) and a main lid (36) of the grand piano, or a body (38) and a piano lid, which is mounted on the body (38) by way of a hinge, of a piano, and as such to produce physical contact between the main lid (36) and the front lid (34) or the rim (48) and the main lid (36) of the grand piano (32), or the body and the piano lid of the piano, for the purpose of sonic coupling.

2. Acoustic resonance transformer (10) according to Claim 1, wherein at least one of the acoustic resonance transformation elements (14) is spherical and has a sphere diameter d1, and is arranged on the flexible suspension (12) in such a way that the sphere diameter d1 coincides with a longitudinal axis of the flexible suspension (12).

3. Acoustic resonance transformer (10) according to Claim 1, wherein at least one of the acoustic resonance transformation elements (14) is cylindrical and has a cylinder axis, and is arranged on the flexible suspension (12) in such a way that the cylinder axis of the acoustic resonance transformation element (14) coincides with a longitudinal axis of the flexible suspension (12).

4. Acoustic resonance transformer (10) according to Claim 1, wherein at least one of the acoustic resonance transformation elements (14) is cylindrical and has a cylinder axis, and is arranged on the flexible suspension (12) in such a way that the cylinder axis of the acoustic resonance transformation element (14) is in a perpendicular orientation with respect to a longitudinal axis of the flexible suspension (12).

5. Acoustic resonance transformer (10) according to Claim 3 or 4, wherein at least one of the acoustic resonance transformation elements (14) has a cylinder axis length 12 in the region of 3 cm and 15 cm.

6. Acoustic resonance transformer (10) according to one of the preceding claims, wherein said acoustic resonance transformer comprises precisely three of the acoustic resonance transformation elements (14),
of which two acoustic resonance transformation elements (14) are fixed at each of the ends of the flexible suspension (12) and
one acoustic resonance transformation element (14) is arranged on the flexible suspension (12) between the fixed acoustic resonance transformation elements (14) in a movable manner.

7. Acoustic resonance transformer (10) according to one of Claims 1 to 5, wherein said acoustic resonance transformer comprises precisely four of the acoustic resonance transformation elements (14),
of which two acoustic resonance transformation elements (14) are fixed at each of the ends of the flexible suspension (12) and
two acoustic resonance transformation elements (14) are arranged on the flexible suspension (12) between the fixed acoustic resonance transformation elements (14) in a movable manner.

8. Acoustic resonance transformer (10) according to one of the preceding claims, wherein the acoustic resonance transformation elements (14) are made from rubber.

9. Acoustic resonance transformer (10) according to one of the preceding claims, wherein the acoustic resonance transformation elements (14) are made from silicone.

10. Piano comprising a body (38), a piano lid, which is mounted on the body (38) by way of a hinge, and an acoustic resonance transformer (10) according to one of the preceding claims, which acoustic resonance transformer is arranged between the body and the piano lid in a sonically coupling manner, the resonance transformation elements (14) being in physical contact with the body (38) and the piano lid.

11. Grand piano (32) comprising a body (38) with a rim (48), a main lid (36), a front lid (34), which is mounted on the main lid (36) by way of a hinge (42), and an acoustic resonance transformer (10) according to one of Claims 1 to 9, which acoustic resonance transformer either is arranged between the main lid (36) and the front lid (34) in a sonically coupling manner, the resonance transformation elements (14) being in physical contact with the main lid (36) and the front lid (34), and/or is arranged between the rim (48) of the body (38) of the grand piano (32) and the main lid (36) of the grand piano (32) in a sonically coupling manner, the resonance transformation elements (14) being in physical contact with the rim (48) and the main lid (36).

12. Method for optimizing the sound of a piano comprising a body (38) and a piano lid, which is mounted on the body (38) by way of a hinge, comprising the steps of:
a) arranging an acoustic resonance transformer (10) according to one of Claims 1 to 9 in a sonically coupling manner between the body (38) and the piano lid on a side opposite the hinge, the resonance transformation elements (14) being in physical contact with the body and the piano lid,
b) producing a note by playing the piano, and
c) moving at least one of the movable acoustic resonance transformation elements (14) from an initial position to a position at which a volume of a note produced by playing the piano in an identical manner to in step b) is amplified relative to the note produced in step b) and/or harmonic resonances of the note produced are reduced relative to the note produced in step b).

13. Method for optimizing the sound of a grand piano (32) comprising a body (38) with a rim (48), and a main lid (36), which is mounted on the body (38) by way of a first hinge (40), and also a front lid (34), which is mounted on the main lid (36) by way of a second hinge (42), comprising the steps of:
a) arranging an acoustic resonance transformer (10) according to one of Claims 1 to 9 in a sonically coupling manner between the front lid (34) and the main lid (36), the resonance transformation elements (14) being in physical contact with the main lid (36) and the front lid (34), and/or between the rim (48) of the body (38) of the grand piano (32) and the main lid (36), the resonance transformation elements (14) being in physical contact with the rim (48) and the main lid (36),
b) producing a note by playing the grand piano (32), and
c) moving at least one of the movable acoustic resonance transformation elements from an initial position to a position at which a volume of a note produced by playing the grand piano (32) in an identical manner to in step b) is amplified relative to the note produced in step b) and/or harmonic resonances of the note produced are reduced relative to the note produced in step b).

## Revendications

1. Transformateur résonant acoustique (10) comprenant :
une suspension flexible (12), et
deux éléments de transformation résonants acoustiques ou plus (14), qui sont agencés sur la suspension flexible (12),
**caractérisé en ce qu'**au moins l'un des éléments de transformation résonants acoustiques (14) est agencé de manière coulissante sur la suspension flexible (12), les éléments de transformation résonants (14) étant adaptés pour être agencés entre un couvercle principal (36) et un couvercle avant (34) d'un piano à queue (32) ou entre un rebord (48) d'un corps (38) d'un piano à queue (32) et un couvercle principal (36) du piano à queue ou un corps (38) et un couvercle de piano d'un piano fixé au corps (38) par une charnière, et pour établir ainsi un contact physique entre le couvercle principal (36) et le couvercle avant (34) ou le rebord (48) et le couvercle principal (36) du piano à queue (32) ou le corps et le couvercle de piano du piano pour le couplage acoustique.

2. Transformateur résonant acoustique (10) selon la revendication 1, dans lequel au moins l'un des éléments de transformation résonants acoustiques (14) est de forme sphérique et présente un diamètre de sphère d1 et est agencé sur la suspension flexible (12) de telle sorte que le diamètre de sphère d1 coïncide avec un axe longitudinal de la suspension flexible (12).

3. Transformateur résonant acoustique (10) selon la revendication 1, dans lequel au moins l'un des éléments de transformation résonants acoustiques (14) est de forme cylindrique et présente un axe de cylindre et est agencé sur la suspension flexible (12) de telle sorte que l'axe de cylindre de l'élément de transformation résonant acoustique (14) coïncide avec un axe longitudinal de la suspension flexible (12).

4. Transformateur résonant acoustique (10) selon la revendication 1, dans lequel au moins l'un des éléments de transformation résonants acoustiques (14) est de forme cylindrique et présente un axe de cylindre et est agencé sur la suspension flexible (12) de telle sorte que l'axe de cylindre de l'élément de transformation résonant acoustique (14) est orienté perpendiculairement à un axe longitudinal de la suspension flexible (12).

5. Transformateur résonant acoustique (10) selon la revendication 3 ou 4, dans lequel au moins l'un des éléments de transformation résonants acoustiques (14) présente une longueur d'axe de cylindre l2 dans la plage allant de 3 cm à 15 cm.

6. Transformateur résonant acoustique (10) selon l'une quelconque des revendications précédentes, celui-ci comprenant exactement trois des éléments de transformation résonants acoustiques (14), dont deux éléments de transformation résonants acoustiques (14) sont fixés respectivement aux extrémités de la suspension flexible (12) et un élément de transformation résonant acoustique (14) est agencé de manière coulissante sur la suspension flexible (12) entre les éléments de transformation résonants acoustiques (14) fixés.

7. Transformateur résonant acoustique (10) selon l'une quelconque des revendications 1 à 5, celui-ci comprenant exactement quatre des éléments de transformation résonants acoustiques (14), dont deux éléments de transformation résonants acoustiques (14) sont fixés respectivement aux extrémités de la suspension flexible (12) et deux éléments de transformation résonants acoustiques (14) sont agencés de manière coulissante sur la suspension flexible (12) entre les éléments de transformation résonants acoustiques (14) fixés.

8. Transformateur résonant acoustique (10) selon l'une quelconque des revendications précédentes, dans lequel les éléments de transformation résonants acoustiques (14) sont fabriqués en caoutchouc.

9. Transformateur résonant acoustique (10) selon l'une quelconque des revendications précédentes, dans lequel les éléments de transformation résonants acoustiques (14) sont fabriqués en silicone.

10. Piano, qui présente un corps (38), un couvercle de piano fixé au corps (38)par une charnière, et un transformateur résonant acoustique (10) selon l'une quelconque des revendications précédentes, qui est agencé en couplage acoustique entre le corps et le couvercle de piano, les éléments de transformation résonants (14) étant physiquement en contact avec le corps (38) et le couvercle de piano.

11. Piano à queue (32), qui présente un corps (38) comprenant un rebord (48), un couvercle principal (36), un couvercle avant (34) fixé au couvercle principal (36) par une charnière (42), et un transformateur résonant acoustique (10) selon l'une quelconque des revendications 1 à 9, qui est agencé en couplage acoustique entre le couvercle principal (36) et le couvercle avant (34), les éléments de transformation résonants (14) étant physiquement en contact avec le couvercle principal (36) et le couvercle avant (34), et/ou qui est agencé en couplage acoustique entre le rebord (48) du corps (38) du piano à queue (32) et le couvercle principal (36) du piano à queue (32), les éléments de transformation résonants (14) étant physiquement en contact avec le rebord (48) et le couvercle principal (36).

12. Procédé d'optimisation du son d'un piano, qui présente un corps (38) et un couvercle de piano fixé au corps (38) par une charnière, comprenant les étapes suivantes :
a) l'agencement d'un transformateur résonant acoustique (10) selon l'une quelconque des revendications 1 à 9 en couplage acoustique entre le corps (38) et le couvercle de piano sur un côté qui est opposé à la charnière, les éléments de transformation résonants (14) étant en contact physique avec le corps et le couvercle de piano,
b) la production d'un son en jouant du piano, et
c) le coulissement d'au moins l'un des éléments de transformation résonants acoustiques coulissants (14) d'une position initiale à une position dans laquelle un volume d'un son produit en jouant du piano de la même manière qu'à l'étape b) est renforcé par rapport au son produit à l'étape b) et/ou les résonances harmoniques du son produit sont réduites par rapport au son produit à l'étape b).

13. Procédé d'optimisation du son d'un piano à queue (32), qui présente un corps (38) comprenant un rebord (48) et un couvercle principal (36) fixé au corps (38) par une première charnière (40) ainsi qu'un couvercle avant (34) fixé au couvercle principal (36) par une deuxième charnière (42), comprenant les étapes suivantes :
a) l'agencement d'un transformateur résonant acoustique (10) selon l'une quelconque des revendications 1 à 9 en couplage acoustique entre le couvercle avant (34) et le couvercle principal (36), les éléments de transformation résonants (14) étant en contact physique avec le couvercle principal (36) et le couvercle avant (34), et/ou entre le rebord (48) du corps (38) du piano à queue (32) et le couvercle principal (36), les éléments de transformation résonants (14) étant physiquement en contact avec le rebord (48) et le couvercle principal (36),
b) la production d'un son en jouant du piano à queue (32), et
c) le coulissement d'au moins l'un des éléments de transformation résonants acoustiques coulissants d'une position initiale à une position dans laquelle un volume d'un son produit en jouant du piano à queue (32) de la même manière qu'à l'étape b) est renforcé par rapport au son produit à l'étape b) et/ou les résonances harmoniques du son produit sont réduites par rapport au son produit à l'étape b).
